# EUROPEAN PATENT APPLICATION

(11) **EP 2 249 303 A1**
(43) Date of publication of application: **10.11.2010**
(21) Application number: 09703619.8
(22) Date of filing: 15.01.2009
(51) Int. Cl.: G06Q 30/00, G06Q 10/00

(54) **ADVERTISEMENT DELIVERY METHOD AND ADVERTISEMENT SERVER**

(30) Priority: 21.01.2008 JP 2008010402
(71) Applicant: NTT DoCoMo, Inc., Chiyoda-ku Tokyo 100-6150 (JP)
(72) Inventor: ARAI, Ryohei, Tokyo 100-6150 (JP); KIKUCHI, Daisuke, Tokyo 100-6150 (JP)
(74) Representative: Schwabe - Sandmair - Marx
(86) International application number: PCT/JP2009/050484
(87) International publication number: WO 2009/093519

(57) **Abstract**

Preferences of each user are more accurately grasped from a playback history of a playback type content such as music and video and advertisement information that reflects preferences per user is served. According to the advertisement serving method of the present invention, each mobile terminal (1A, 1B, 1C) transmits content playback history information which is a playback history of a content played back on each mobile terminal (1A, 1B, 1C) to an advertisement server (3), the advertisement server (3) summarizes the content playback history information from each mobile terminal (1A, 1B, 1C), creates a summary list which is a playback content list, determines preferences for a content of the mobile terminal user from the content playback history information of the mobile terminal to which an advertisement is to be served, compares the determined preference information with the summary list, extracts a content that matches the preferences of the mobile terminal user from the summary list, creates content-related advertisement information extracted from the summary list and serves the advertisement information to the mobile terminal user.

## Description

### Technical Field

The present invention relates to an advertisement serving method and advertisement server, and more specifically, to an advertisement serving method and advertisement server that serves advertisement information to a terminal apparatus such as a mobile phone set.

### Background Art

Conventionally, automotive terminal devices are disclosed which recommend a music content that matches preferences of a user based on playback history information of the music content (Patent Document 1). According to the automotive terminal device described in Patent Document 1, communication is performed among a plurality of automotive terminal devices and each automotive terminal device recommends a music content to other automotive terminal devices based on playback history information of the music content.

Furthermore, a server apparatus is proposed which judges preferences of a user based on purchase history information on products purchased by the user and serves advertisement information concerning the products to the user (Patent Document 2).
[Patent Document 1] Japanese Patent Application Laid-Open No.2006-3401
[Patent Document 2] Japanese Patent Application Laid-Open No.2006-4395

### Disclosure of the Invention

However, purchase history information of a content merely indicates purchase records of a user and does not always represent preferences of the user accurately. Therefore, even if advertisement information is served in anticipation of preferences of the user based on this purchase history information, this may not lead to provision of advertisement information that accurately reflects the preferences of the user and a high advertisement effect cannot always be expected.

The present invention has been implemented in view of the above described problem and it is an object of the present invention to serve an advertisement serving method and advertisement server that more accurately grasps preferences of the user from a playback history of a playback type content such as music or video and serves advertisement information from which a high advertisement effect can be expected for each user.

The advertisement serving method of the present invention includes steps of transmitting content playback history information which is a playback history of a content played back on each mobile terminal from each mobile terminal to an advertisement server, the advertisement server summarizing the content playback history information from the each mobile terminal and creating a summary list which is a list of playback contents, determining preferences for a content of a mobile terminal user from the content playback history information of the mobile terminal to which an advertisement is to be served, comparing the determined preference information with the summary list and extracting a content that matches the preferences of the mobile terminal user from the summary list, and creating advertisement information concerning the content extracted from the summary list and serving the advertisement information to the mobile terminal of the mobile terminal user.

According to this method, preferences of a content of the mobile terminal user are determined from content playback history information of the mobile terminal to which an advertisement is to be served, the determined preferences information is compared with the summary list, advertisement information concerning the content in which a content that matches preferences of the mobile terminal user is extracted is created and served to the mobile terminal of the mobile terminal user. This makes it possible to accurately grasp preferences of the mobile terminal user and serve advertisement information that matches the preferences of the mobile terminal user. Therefore, since preferences of each mobile terminal user are accurately reflected in the advertisement information served to each mobile terminal user, it is possible to improve advertisement effects such as getting the user who views the advertisement information to purchase the content included in the advertisement information.

Furthermore, in the above described advertisement serving method of the present invention, as preferences for a content of the mobile terminal user, it is preferable to determine a genre to which a playback content having a relatively high playback frequency belongs from the content playback history information and extract a content not included in the content playback history information from a genre that matches the genre determined in the summary list.

In this case, since a genre to which a playback content having a relatively high playback frequency belongs is determined from the content playback history information and a content not included in the content playback history information is extracted from a genre that matches the determined genre in the summary list, it is possible to extract a content that more accurately reflects preferences for the content of the mobile terminal user. That is, since a genre which is the center of preferences of the mobile terminal user is predicted from the genre to which the content belongs and a content the mobile terminal user has never played back is extracted from within the genre, it is possible to extract a content from which a particularly high advertisement effect can be expected compared to contents that belong to genres different from the genre.

Furthermore, in the above described advertisement serving method of the present invention, it is preferable to determine a playback position indicating the terminal location during content playback of a playback content having a high playback frequency from the content playback history information as additional information to determine preferences for a content of the mobile terminal user and extract a content not included in the content playback history information from a playback position that matches the playback position determined in the summary list.

In this case, since a playback position indicating the terminal location during content playback of a playback content having a high playback frequency is determined from the content playback history information as additional information to determine preferences for contents of the mobile terminal user and a content not included in the content playback history information is extracted from a playback position that matches the playback position determined in the summary list, it is possible to extract a content that more accurately reflects preferences for a content of the mobile terminal user. That is, since the center of preferences of the mobile terminal user is predicted from the playback position of the content and a content the mobile terminal user has never played back within the playback position is extracted, it is possible to extract a content from which a particularly high advertisement effect can be expected compared to a content played back at a position different from the playback position.

For example, in the advertisement serving method of the present invention, the content played back on the each mobile terminal may be configured of a music content or video content.

For example, in the advertisement serving method of the present invention, the advertisement server may be constructed within a mobile communication center that serves an Internet connection service connecting each mobile terminal to the Internet via a mobile communication network.

The advertisement server of the present invention is an advertisement server that serves an advertisement to each mobile terminal via a communication network, served with a log receiving section that takes in content playback history information which is a playback history of a content played back on each mobile terminal from the each mobile terminal, a summary list creating section that summarizes the content playback history information taken in from the each mobile terminal and creates a summary list which is a list of playback contents, and an advertisement serving section that determines preferences for a content of the mobile terminal user from the content playback history information of a mobile terminal to which an advertisement is to be served, compares the determined preference information with the summary list, extracts a content that matches the preferences of the mobile terminal user from the summary list, creates content-related advertisement information extracted from the summary list and serves the advertisement information to the mobile terminal of the mobile terminal user.

According to this configuration, the advertisement server determines preferences for a content of the mobile terminal user from the content playback history information of the mobile terminal to which an advertisement is to be served, compares the determined preference information with the summary list, creates content-related advertisement information resulting from extracting a content that matches preferences of the mobile terminal user and serves the content to the mobile terminal of the mobile terminal user. This makes it possible to accurately grasp preferences of the mobile terminal user and serve advertisement information that matches preferences of the mobile terminal user. Therefore, since preferences of each mobile terminal user are accurately reflected in the advertisement information served to the each mobile terminal user, it is possible to improve advertisement effects such as getting the user who views the advertisement information to purchase the content included in the advertisement information.

According to the present invention, it is possible to more accurately grasp preferences of each user from a playback history of a playback type content such as music or video and serve advertisement information that reflects preferences for each user. Therefore, it is possible to improve advertisement effects such as getting the user who views the advertisement information in which the user's preferences are accurately reflected to purchase a new content from the advertisement information.

### Brief Description of the Drawings

FIG.1 is a diagram illustrating a schematic configuration of an advertisement serving system according to present Embodiment 1 of the present invention;
FIG.2 is a block diagram illustrating a schematic configuration of a mobile terminal in the advertisement serving system according to Embodiment 1;
FIG.3 is a block diagram illustrating a schematic configuration of a mobile communication center in the advertisement serving system according to Embodiment 1;
FIG.4 is a diagram illustrating an example of a playback log generated by the mobile terminal according to Embodiment 1;
FIG.5 is a diagram illustrating an example of a summary list created by the mobile communication center according to Embodiment 1;
FIG.6 is a diagram illustrating an example of advertisement information created by the mobile communication center according to Embodiment 1;
FIG.7 is a sequence diagram illustrating operation of the advertisement serving system according to Embodiment 1;
FIG.8 is a flowchart illustrating summary list creation processing, matching processing and advertisement creation processing by the mobile communication center according to Embodiment 1;
FIG.9 is a diagram illustrating another example of a playback log generated by the mobile terminal according to Embodiment 1;
FIG.10 is a diagram illustrating another example of a summary list created by the mobile communication center according to Embodiment 1;
FIG.11 is a diagram illustrating another example of advertisement information created by the mobile communication center according to Embodiment 1;
FIG.12 is a diagram illustrating an example of a playback log generated by a mobile terminal according to Embodiment 2 of the present invention;
FIG.13 is a diagram illustrating an example of a summary list created by the mobile communication center according to Embodiment 2;
FIG.14 is a diagram illustrating an example of advertisement information created by the mobile communication center according to Embodiment 2; and
FIG.15 is a flowchart illustrating summary list creation processing, matching processing and advertisement creation processing by the mobile communication center according to Embodiment 2.

### Best Mode for Carrying Out the Invention

Hereinafter, embodiments of the present invention will be described in detail with reference to the accompanying drawings.

### (Embodiment 1)

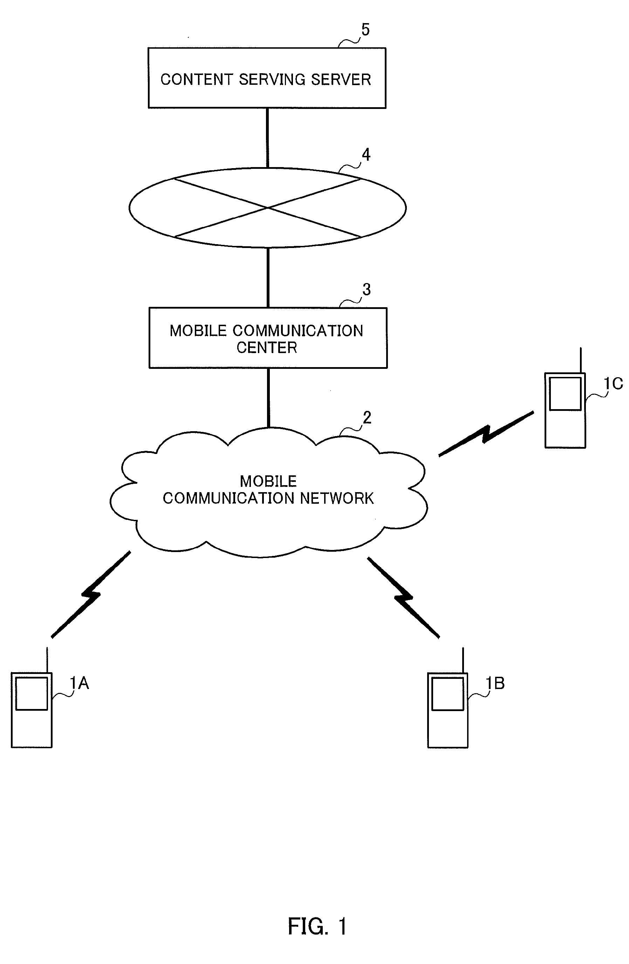

FIG.1 is a diagram illustrating a schematic configuration of an advertisement serving system according to present Embodiment 1. In the advertisement serving system shown in FIG.1, a mobile terminal 1 (1A to 1C) serves as an advertisement provision destination terminal that receives an advertisement and a mobile communication center 3 connected to the mobile terminals 1A to 1C via a mobile communication network 2 serves as an advertisement serving server that generates and serves an optimum advertisement for each user of the mobile terminal 1. The content serving server 5 is connected to the mobile communication center 3 via a network such as the Internet 4. The content serving server 5 is a server that serves a playback type content such as music or video to each mobile terminal and serves a desired content to each mobile terminal in response to access from each mobile terminal (content acquisition request). The content served by the content serving server 5 is music, video or a combination thereof, but not limited to these if the content can be at least played back on the mobile terminal 1 (playback type content). A case will be described below where the content serving server 5 is assumed to serve music data as an example of content.

In the present advertisement serving system, the mobile terminal generates playback history information (playback log) which is a playback history of a content acquired from the content serving server 5, transmits the playback history to the mobile communication center 3, and the mobile communication center 3 judges preferences on the content of each mobile terminal user based on the playback history information and serves advertisement information optimized for each mobile terminal user based on the judgment result (preference information). Although the present embodiment has shown three mobile terminals 1A to 1C for simplicity of explanation, the number of mobile terminals is not limited to three, but arbitrary.

Each mobile terminal 1A to 1C is configured of a mobile phone apparatus or PDA (Personal Digital Assistants) or the like that functions as a playback apparatus that plays back a playback type content, and can transmit/receive information to/from the mobile communication center 3 via the mobile communication network 2. On each mobile terminal 1A to 1C, functions such as a browser function, viewer function and application management function operate under an operating system (mobile terminal OS).

The mobile communication network 2 is a network between each mobile terminal 1A to 1C and the mobile communication center 3. This mobile communication network 2 includes not only a normal mobile communication network but also a mobile packet communication network. The network also includes networks other than the Internet 4 such as LAN (Local Area Network) and WAN (Wide Area Network).

The mobile communication center 3 has a server function that serves an Internet connection service and also carries a gateway function that connects the mobile communication network 2 and the Internet 4, and to be more specific, the mobile communication center 3 is served with an information (advertisement information) serving function, mail transmitting/receiving function, mail storing function, contracted customer management function, information provider management function and information billing function.

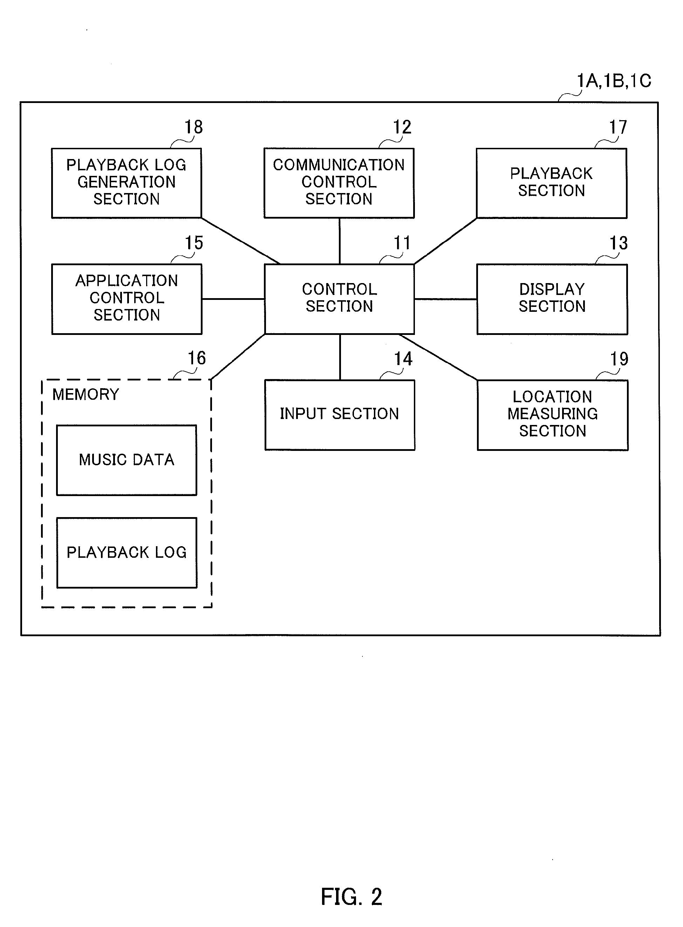

FIG.2 is a block diagram illustrating a schematic configuration of each mobile terminal 1A(1B, 1C) shown in FIG.1. Suppose the configuration shown in FIG.2 is simplified to illustrate the present invention and served with other components to realize the original mobile terminal functions.

The mobile terminal 1A is provided with a control section 11 that controls the entire apparatus, a communication control section 12 that communicates with the mobile communication center 3 via the mobile communication network 2, a display section 13 that displays various types of information such as various types of data and advertisement information, an input section 14 that inputs various types of data and an application control section 15 that starts various applications installed on or downloaded to the apparatus. Furthermore, the mobile terminal 1A is provided with a memory 16 that stores music data acquired through downloading or the like and a generated playback log, a playback section 17 that plays back music data acquired from the content serving server 5, a playback log generation section 18 that generates a playback log of music data played back by the playback section 17 and a location measuring section 19 that measures the location of the own terminal.

The communication control section 12 transmits a request for acquiring desired music data to the content serving server 5 via the mobile communication center 3 and receives music data served from the content serving server 5. Furthermore, the communication control section transmits a playback log generated by the playback log generation section 18, which will be described later, to the mobile communication center 3. Here, the playback log may be transmitted to the mobile communication center 3 at times of, for example, communication, access to a Web, mail transmission and start/operation of a dedicated application from the mobile terminal.

The memory 16 is made up of a RAM (Random Access Memory), stores music data served from the content serving server 5 and also stores a playback log generated by the playback log generation section 18.

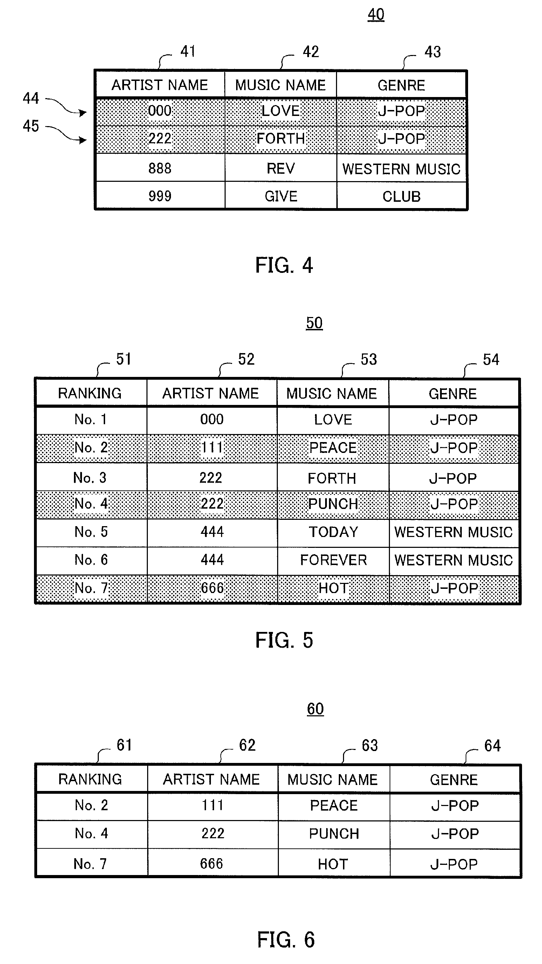

Every time music data is played back by the playback section 17, the playback log generation section 18 generates a playback log for each piece of music data and stores the music data in the memory 16. FIG.4 illustrates an example of playback logs generated by the playback log generation section 18. The playback log 40 shown in the figure is comprised of "artist name" 41 of music data, "music name" 42, "genre" 43 or the like. To be more specific, a playback log 44 is a playback log of music data made up of artist name "000", music name "LOVE" and genre "J-POP" and a playback log 45 is a playback log of music data made up of artist name "222", music name "FORTH" and genre "J-POP." Here, since the playback log 40 is playback history information indicating a playback history of music data, it goes without saying that the playback log 40 includes playback date/time information of the music data. Furthermore, the playback log 40 is transmitted to the mobile communication center 3 together with purchase history information of music data (place of purchase, date/time of purchase or the like) and attribute information specific to the mobile terminal (telephone number, mail address, sex, age or the like).

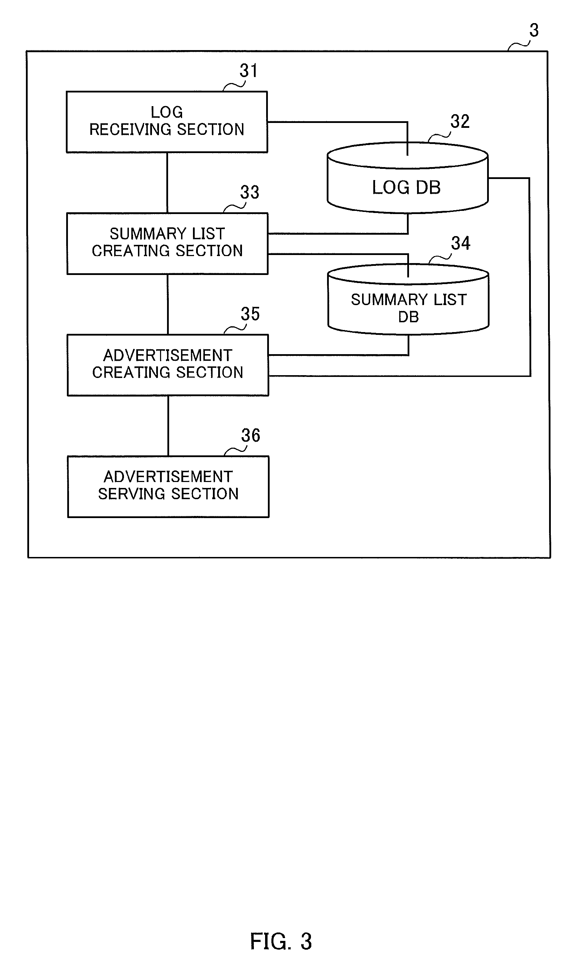

FIG.3 is a block diagram illustrating a schematic configuration of the mobile communication center 3 shown in FIG.1. The mobile communication center 3 has a function of summarizing playback logs provided from each mobile terminal to create a summary list and generating advertisement information optimized for each mobile terminal from the playback logs of the summary list and each mobile terminal, and is provided with components shown in FIG.3 as the configuration for that purpose. The configuration shown in FIG.3 is a simplified one for explanation of the present invention and suppose it is provided with components for realizing original functions of the mobile communication center 3.

The mobile communication center 3 is mainly configured of a log receiving section 31 that acquires a playback log transmitted from the mobile terminal 1A, 1B or 1C via the mobile communication network 2, a log database (DB) 32 that stores the playback log acquired by the log receiving section 31, a summary list creating section 33 that summarizes the playback logs stored in the log DB 32 and creates a summary list, a summary list database (DB) 34 that stores the created summary list, an advertisement creating section 35 that creates advertisement information optimized for each mobile terminal based on the playback log and summary list, and an advertisement serving section 36 that transmits the created advertisement information to the mobile terminal.

The log receiving section 31 collects playback logs from each mobile terminal 1A, 1B or 1C and saves the playback logs in the log DB 32 for each mobile terminal. Here, every time the log DB 32 receives a playback log from each mobile terminal 1A, 1B or 1C, the playback log is updated.

The log DB 32 stores playback history information such as playback logs of music data for each mobile terminal, for example, artist names, music names, genres and playback dates/times of music played back for all mobile terminals managed by the mobile communication center 3. The summary list DB 34 stores a summary list of playback logs of all mobile terminals managed by the mobile communication center 3 sorted, for example, in descending order of the number of playbacks.

The summary list creating section 33 summarizes playback logs of all mobile terminals stored in the log DB 32, sorts the playback logs in descending order of the number of playbacks (descending order of playback frequency) among a plurality of summarized playback logs and creates a summary list in which pieces of music are arranged in order of playback frequency. In the present example, the summary list creating section 33 narrows down playback logs of all mobile terminals stored in the log DB 32 depending on whether or not there are playback logs generated within a predetermined period (e.g., 30 days) from the time at which a certain playback log of the mobile terminal to which an advertisement is to be served. When there are playback logs generated within the predetermined period, the summary list creating section 33 extracts only the playback logs generated within the predetermined period and creates a summary list. On the other hand, when there are no playback logs generated within the predetermined period, the summary list creating section 33 creates a summary list from all playback logs stored in the log DB 32 (past playback logs dating back from the predetermined period). FIG.5 is a diagram illustrating an example of the summary list created by the summary list creating section 33. The summary list 50 shown in FIG.5 is mainly configured of "ranking" 51, "artist name" 52, "music name" 53 and "genre" 54 and sorts pieces of music in descending order of the number of playbacks of music.

The advertisement creating section 35 creates advertisement information optimized for each mobile terminal user based on the playback log 40 of the mobile terminal user stored in the log DB 32 and the summary list 50 stored in the summary list DB 34. That is, the advertisement creating section 35 identifies a genre to which a content (playback content) having a relatively large number of playbacks from the playback log 40 of the mobile terminal and predicts preferences of the mobile terminal user from the genre. The advertisement creating section 35 then compares the playback log with the summary list with reference to the genre of the identified music (matching processing) and creates advertisement information in which preferences of the mobile terminal user are reflected as shown in FIG.6. FIG.6 is a diagram illustrating an example of the advertisement information 60 created by the advertisement creating section 35. The advertisement information 60 shown in FIG.6 is made up of, for example, "ranking" 61, "artist name" 62, "music name" 63 and "genre" 64. The processing contents for creating the advertisement information 60 will be described later. The advertisement information 60 is not limited to the configuration in which the components of the summary list 50 shown in FIG.5 are extracted, but PR information (recommended information concerning music data or the like) in text or HTML (Hyper Text Markup Language)/XML (Extensible Markup Language) may be added or may be configured of an image/moving image or the like.

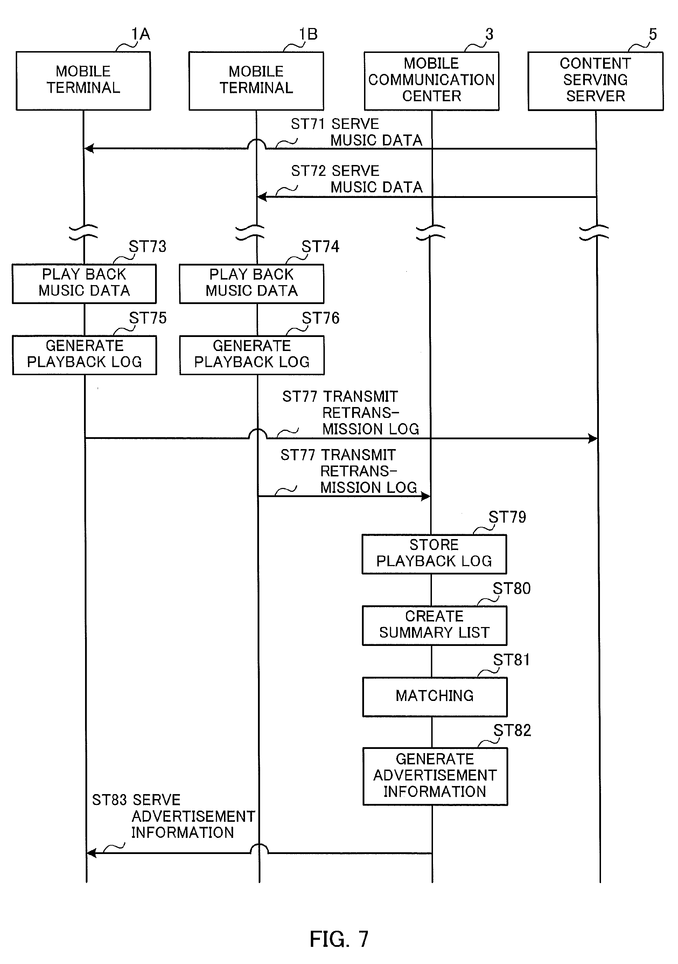

Next, operation of the advertisement serving system will be described using FIG.7. FIG.7 is a sequence diagram of operation after the mobile terminal 1A receives music data from the content serving server 5 until the mobile communication center 3 serves advertisement information to the mobile terminal 1A. Here, a case will be described as an example where the user of the mobile terminal 1A is a target to which an advertisement is served.

First, the user of each mobile terminal 1A, 1B accesses the content serving server 5 via the mobile communication center 3 to download desired music data. The content serving server 5 provides music data to each mobile terminal 1A, 1B via the mobile communication center 3 (step ST71, step ST72). The user of each mobile terminal 1A, 1B plays back music data at arbitrary timing (step ST73, step ST74). The playback log generation section 18 generates a playback log of the played back music data (step ST75, step ST76) and transmits the playback log to the mobile communication center 3 (step ST77, step ST78).

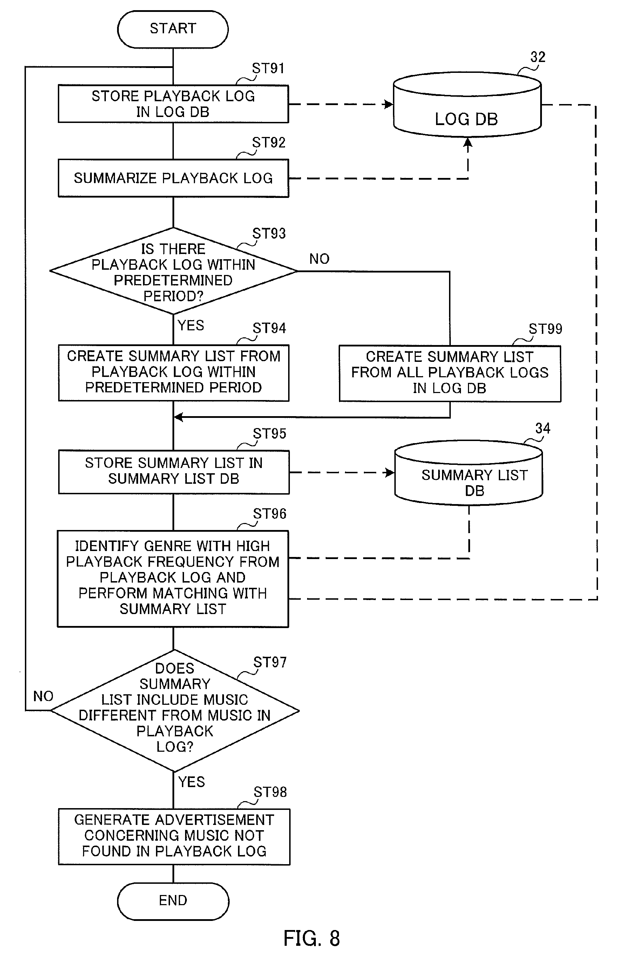

The log receiving section 31 of the mobile communication center 3 takes in the playback log transmitted from each mobile terminal 1A, 1B and stores the playback log in the log DB 32 (step ST79). The summary list creating section 33 sorts pieces of music in descending order of the number of playbacks from all playback logs of the mobile terminal 1A, 1B stored in the log DB 32 and generates a summary list (step ST80). The advertisement creating section 35 compares the summary list created with the playback log of the mobile terminal 1A (step ST81) and creates advertisement information that matches preferences of the user of the mobile terminal 1A (step ST82). To be more specific, summary list creation processing, matching processing and advertisement information creation processing are performed as shown in FIG.8.

FIG.8 is a flowchart illustrating summary list creation processing by the summary list creating section 33, and matching processing and advertisement information creation processing by the advertisement creating section 35. Furthermore, the playback log 40 shown in FIG.4 will be described as the playback log of the mobile terminal 1A with reference to FIG.8 and FIG.4 to FIG.6 as appropriate.

When the playback log of each mobile terminal 1A, 1B is stored in the log DB 32 (step ST91), the summary list creating section 33 reads and summarizes the playback log stored in the log DB 32 (step ST92) and judges whether or not there are playback logs generated within a predetermined period (e.g., 30 days) after generation of the playback log 40 of the mobile terminal 1A in the log DB 32 (step ST93). When there are playback logs within the predetermined period (step ST93: Yes), the summary list creating section 33 extracts only the playback logs within the predetermined period, sorts pieces of music from the extracted playback logs in descending order of playback frequency, creates the summary list 50 and stores the pieces of music in the summary list DB 34 (step ST94, step ST95). In this case, the summary list creating section 33 narrows down playback logs to those within the predetermined period and creates a summary list from all playback logs of the user dating back for a predetermined period of time from the present, and it is thereby possible to obtain the latest overall playback tendency of the user, that is, latest ranking information from the summary list.

Next, the advertisement creating section 35 identifies the genre 43 with a high playback frequency from the playback log 40 of the mobile terminal 1A to which an advertisement is to be served and performs matching with the summary list 50 (step ST96). To be more specific, since the genre 43 of music having a relatively high playback frequency is concentrated on "J-POP" in the playback log 40, the advertisement creating section 35 predicts, from the playback log 40 shown in FIG.4, that the center of preferences of the user of the mobile terminal 1A is music belonging to the genre "J-POP" and performs matching between music according to the genre "J-POP" in the playback log 40 and music according to the same genre "J-POP" in the summary list 50. The advertisement creating section 35 then judges whether or not the summary list includes music different from music in the playback log 40 with respect to the identified genre (step ST97). That is, focusing on the same genre "J-POP," the advertisement creating section 35 judges the presence/absence of new music the user of the mobile terminal 1A has never played back in the summary list 50. When the summary list 50 includes music different from the music included in the playback log 40 (step ST97: Yes), the advertisement creating section 35 creates the advertisement information 60 that recommends the different music to the user (step ST98).

To be more specific, when the playback log 40 in FIG.4 is compared to the summary list 50 in FIG.5, three pieces of music ("PEACE", "PUNCH" and "HOT") with ranking "No.2", "No.4" and "No.7" in the summary list 50 are not found in the playback log 40. Therefore, since the above described three pieces of music match preferences of the user of the mobile terminal 1A, the advertisement creating section 35 judges, when advertisement information on these three pieces of music is served to the user of the mobile terminal 1A, that there is a high probability that the user may listen to (purchase) the music and creates the advertisement information 60 for recommending the three pieces of music as shown in FIG.6.

On the other hand, when there is no playback log within the predetermined period after generation of the playback log of the mobile terminal 1A in the log DB 32 (step ST93: No), the advertisement creating section 35 sorts all playback logs of the mobile terminal user stored in the log DB 32 in descending order of playback frequency and creates a summary list (step ST99). In this case, since the summary list is created from playback logs dating back for a long period of time from when the playback log was generated, that is, all past playback logs stored in the log DB 32, it is possible to also serve, to such a user who does not play back the music data after the purchase of the music data, advertisement information that reflects preferences of the user.

Returning to FIG.7 again, the advertisement serving section 36 transmits the advertisement information 60 generated by the advertisement creating section 35 to the mobile terminal 1A (step ST83).

Thus, when music is played back on each mobile terminal 1A, 1B, 1C, the advertisement serving system according to the present embodiment stores playback logs of the music including the genre of the music in the mobile communication center 3, summarizes these playback logs and creates a summary list. The advertisement serving system then compares the playback logs of the user of each mobile terminal 1A, 1B, 1C with the summary list, judges preferences of the mobile terminal user from the record of the content playback and serves advertisement information optimized to preferences of each mobile terminal user. This makes it possible to accurately grasp preferences of the mobile terminal user and serve advertisement information that matches preferences of the mobile terminal user, and thereby improve advertisement effects such as leading to the purchase of new music data. That is, since preferences of each mobile terminal user are accurately reflected in the advertisement information served to each mobile terminal user, it is possible to improve the possibility of getting the user who views the advertisement information to purchase music data in the advertisement information.

A case has been described in the present embodiment as an example where advertisement information creation and advertisement serving processing are performed through a series of operations, but the present invention is not limited to this and it may also be possible to temporarily save the created advertisement information, serve, at timing at which a plurality of pieces of advertisement information for the mobile terminal user to whom the advertisement information is served are created, the plurality of pieces of advertisement information to the mobile terminal user collectively.

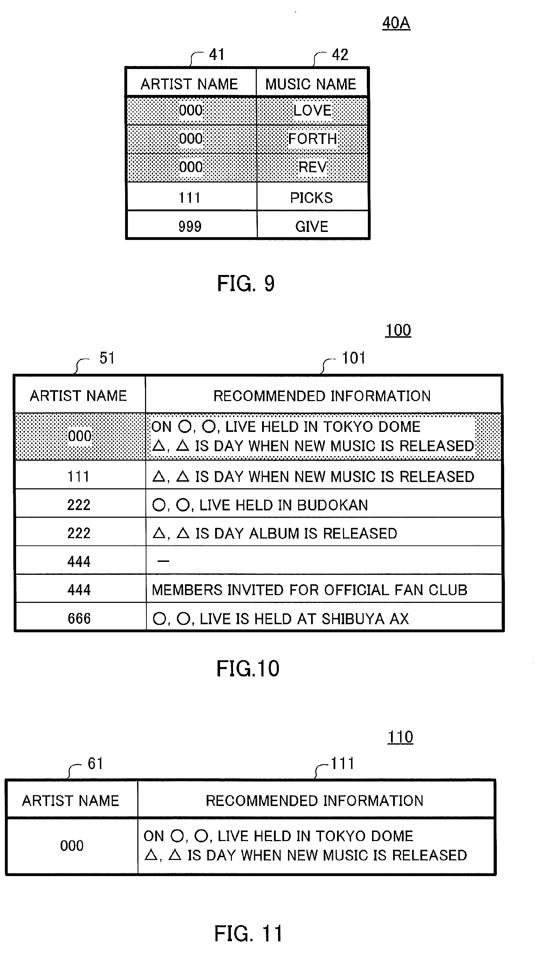

A case has been described in above described Embodiment 1 where the "genre" 43 to which music belongs is included in the playback log 40, but the present invention is not limited to this and, for example, as shown in FIG.9, a playback log 40A may be made up of the "artist" 41 and "music name" 42 without the "genre" 43. In this case, an advertisement database (DB) for storing an advertisement material made up of information on an artist may be provided in the mobile communication center 3 and the advertisement DB may store live and concert information (date/time and place) of an artist from the content serving server 5 and recommended information on the artist such as a release date of new music. After acquiring the playback log 40A of the mobile terminal user to whom an advertisement is to be served, the summary list creating section 33 sorts the playback logs of all the mobile terminal users 1 in the log DB 32 in order of playback frequency as shown in FIG.10, associates the above described "recommended information" 101 with these playback logs and creates a summary list 100. In this case, the advertisement creating section 35 performs matching processing between the playback log 40A and summary list 100, creates advertisement information 110 including "recommended information" 111 concerning an artist with a high playback frequency in the playback log 40A as shown in FIG.11 and serves the advertisement information 110 to the mobile terminal user. Thus, since the advertisement information includes the recommended information of the artist, even if the summary list does not include new music data not included in the playback log, it is possible to improve the advertisement effect from the recommended information on music data that matches preferences of the mobile terminal user.

### (Embodiment 2)

While the advertisement serving system according to above described Embodiment 1 creates advertisement information based on the genre to which music in a playback log belongs, an advertisement serving system according to present Embodiment 2 creates advertisement information based on playback position information of the mobile terminal at the time of playback of music of each mobile terminal (at the time of generation of a playback log). In the advertisement serving system according to Embodiment 2, the configurations of the mobile terminal and mobile communication center 3 are similar to the configurations in FIG.2 and FIG.3, and therefore descriptions thereof will be omitted.

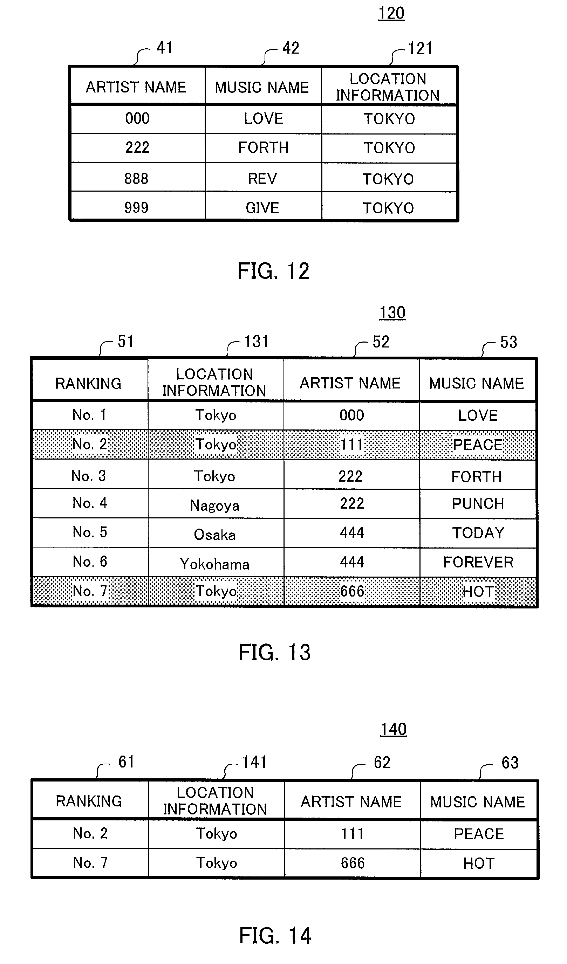

FIG.12 is a diagram illustrating an example of playback logs generated by the mobile terminal according to the present embodiment. The playback log 120 shown in FIG.12 includes "location information" 121 instead of the "genre" 43 included in the playback log 40 shown in FIG.4. To be more specific, the playback log 120 shown in FIG.12 is made up of the "artist name" 41, "music name" 42 and "location information" 121 of music data. Here, the location information is data indicating the terminal location at the time of playback and is additional information to determine preferences for a content of the mobile terminal user. For this location information, for example, an arbitrary area such as prefectural and city governments or metropolis such as "Tokyo", "Osaka" or areas such as "Kanto" and "Kansai" can be set.

FIG.13 is a diagram illustrating an example of a summary list created by the mobile communication center 3 according to the present embodiment. The summary list 130 shown in FIG.13 includes "location information" 131 instead of the "genre" 54 included in the summary list 50 shown in FIG.5. To be more specific, the summary list 130 shown in FIG.13 is made up of the "ranking" 51, "location information" 131, "artist name" 52 and "music name" 53 and all summarized playback logs of the mobile terminal user 1 are sorted in descending order of the number of playbacks.

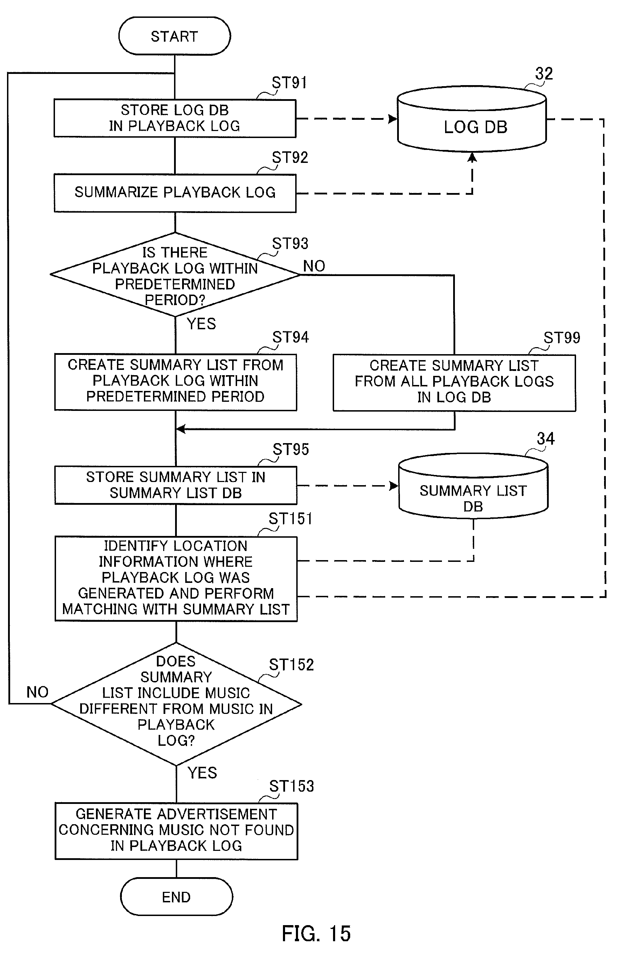

Next, summary list creation processing, matching processing and advertisement information creation processing according to the present embodiment will be described using FIG.12 to FIG.15. FIG.15 is a flowchart illustrating summary list creation processing by the summary list creating section 33 and matching and advertisement information creation processing by the advertisement creating section 35. A case will be described below where the user of the mobile terminal 1A is one to whom an advertisement is served and suppose the playback log 120 shown in FIG.12 is a playback log of the mobile terminal 1A. In FIG.15, the same processes as those shown in FIG.8 will be assigned the same reference numerals and detailed descriptions thereof will be omitted.

When a playback log of each mobile terminal 1A, 1B is stored in the log DB 32 (step ST91), the summary list creating section 33 summarizes the playback log stored in the log DB 32 (step ST92) and judges whether or not there are playback logs within a predetermined period (e.g., 30 days) after generation of the playback log 120 of the mobile terminal 1A in the log DB 32 (step ST93). When there are playback logs within a predetermined period (step ST93: Yes), the summary list creating section 33 extracts only the playback logs within the predetermined period, sorts the extracted playback logs in descending order of playback frequency, creates a summary list and stores the summary list in the summary list DB 34 (step ST94, step ST95).

Next, the advertisement creating section 35 identifies the terminal location (area when music is played back) when the playback log 120 of the mobile terminal 1A is generated and performs matching with the summary list 130 (step ST151). That is, the advertisement creating section 35 determines the playback position of music having a relatively high playback frequency from the playback log 120 and compares the playback position with the summary list 130. In the present example, since terminal positions where the playback log 120 is generated are concentrated on "Tokyo" according to the playback log 120 shown in FIG.12, the advertisement creating section 35 identifies that the action area (action range) of the user of the mobile terminal 1A is centered on "Tokyo" and performs matching between music associated with the location information "Tokyo" in the playback log 120 and music associated with the same location information "Tokyo" in the summary list 130. The advertisement creating section 35 then judges with regard to the identified location information whether or not the summary list 130 includes music different from music included in the playback log 120 (step ST152). That is, focusing on the same location information "Tokyo," the advertisement creating section 35 predicts the action range of the user of the mobile terminal 1A and judges the presence/absence of new music the user of the mobile terminal 1A has never played back from the summary list 130 within the action range. When the summary list includes music different from music included in the playback log (step ST152: Yes), the advertisement creating section 35 creates advertisement information on the different music (step ST153).

To be more specific, when the playback log 120 in FIG.12 is compared with the summary list 130 in FIG.13, the two pieces of music ("PEACE" and "HOT") with ranking "No.2" and "No.7" in the summary list 130 are not found in the playback log. Since the playback log of the mobile terminal user is comprised of only those generated in "Tokyo," the advertisement creating section 35 predicts that the above described two pieces of music match preferences of the user of the mobile terminal 1A. That is, the advertisement creating section 35 estimates that the center of preferences of the user of the mobile terminal 1A is in "Tokyo" (music which is popular in "Tokyo" area) and judges, when advertisement information on the above described two pieces of music corresponding to the location information "Tokyo" is served, that a particularly high advertisement effect can be expected compared to when advertisement information on music played back with other location information and generates advertisement information 140 that recommends the two pieces of music as shown in FIG.14 to the user. In other words, the advertisement creating section 35 narrows down a population to be matched from the terminal location information "Tokyo" when the playback log 120 of the user of the mobile terminal 1A is played back to the mobile terminal user who generated the playback log including the same location information "Tokyo" and generates advertisement information.

Thus, when music is played back on each mobile terminal, the advertisement serving system according to the present embodiment stores playback logs of the music including playback position information during the music playback in the mobile communication center, summarizes these playback logs and creates a summary list. The advertisement serving system then compares the playback log of each mobile terminal user with the summary list, judges preferences of each mobile terminal user from content playback records and serves advertisement information optimized to preferences of each mobile terminal user. This makes it possible to accurately grasp preferences of the mobile terminal user, serve advertisement information that matches preferences of the mobile terminal user and thereby improve advertisement effects such as leading to the purchase of new music data.

Furthermore, the present invention is not limited to the above described embodiments, but can be implemented modified in various ways. For example, the processing sections and processing procedures can be implemented modified as appropriate without departing from the scope of the present invention. Other parts can also be implemented modified as appropriate without departing from the scope of the present invention.

For example, a case has been described in the above described embodiments as an example where the mobile communication center 3 is configured as an advertisement serving server, but the present invention is not limited to this and the advertisement serving server may also be configured so as to be served outside the mobile communication center 3.

### Industrial Applicability

The present invention is applicable to an advertisement serving system served with a terminal apparatus such as a mobile phone set and a mobile communication center that serves advertisement information to the terminal apparatus.

## Claims

1. An advertisement serving method comprising steps of:
transmitting content playback history information which is a playback history of a content played back on each mobile terminal from each mobile terminal to an advertisement server;
the advertisement server summarizing the content playback history information from the mobile terminal and creating a summary list which is a list of playback contents;
determining preferences for a content of a mobile terminal user from the content playback history information of the mobile terminal to which an advertisement is to be served;
comparing the determined preference information with the summary list and extracting a content that matches the preferences of the mobile terminal user from the summary list; and
creating advertisement information concerning the content extracted from the summary list and serving the advertisement information to the mobile terminal of the mobile terminal user.

2. The advertisement serving method according to claim 1, wherein as preferences for a content of the mobile terminal user, a genre to which a playback content having a relatively high playback frequency belongs is determined from the content playback history information, and
a content not included in the content playback history information is extracted from a genre that matches the genre determined in the summary list.

3. The advertisement serving method according to claim 1, wherein a playback position indicating the terminal location during content playback of a playback content having a high playback frequency is determined from the content playback history information as additional information to determine preferences for a content of the mobile terminal user, and
a content not included in the content playback history information is extracted from a playback position that matches the playback position determined in the summary list.

4. The advertisement serving method according to any one of claims 1 to 3, wherein the content played back on the each mobile terminal is a music content or video content.

5. The advertisement serving method according to any one of claims 1 to 4, wherein the advertisement server is constructed within a mobile communication center that serves an Internet connection service connecting each mobile terminal to the Internet via a mobile communication network.

6. An advertisement server that serves an advertisement to each mobile terminal via a communication network, comprising:
a log receiving section that takes in content playback history information which is a playback history of a content played back on each mobile terminal from the each mobile terminal;
a summary list creating section that summarizes the content playback history information taken in from the each mobile terminal and creates a summary list which is a list of playback contents; and
an advertisement serving section that determines preferences for a content of the mobile terminal user from the content playback history information of a mobile terminal to which an advertisement is to be served, compares the determined preference information with the summary list, extracts a content that matches the preferences of the mobile terminal user from the summary list, creates content-related advertisement information extracted from the summary list and serves the advertisement information to the mobile terminal of the mobile terminal user.
